# EUROPÄISCHE PATENTSCHRIFT

(11) **EP 0 543 098 B1**
(45) Veröffentlichungstag und Bekanntmachung des Hinweises auf die Patenterteilung: **03.05.1995**
(21) Anmeldenummer: 92115210.4
(22) Anmeldetag: 05.09.1992
(51) Int. Cl.: B60M 1/30, E01B 25/24

(54) **Isolationsträger für Stromschienen**
Insulator support for conductor rails
Support d'isolation pour barres conductrices

(30) Priorität: 21.11.1991 DE 9114501 U
(43) Veröffentlichungstag der Anmeldung: 26.05.1993
(73) Patentinhaber: REHAU AG + Co, 95111 Rehau (DE)
(72) Erfinder: Strickstrock, Theo, D-95111 Rehau (DE)

(56) Entgegenhaltungen:
- DE-C- 3 337 723
- FR-A- 2 175 670
- NL-A- 7 413 705

## Beschreibung

Die Erfindung betrifft einen Isolationsträger für Stromschienen mit einem Fußteil und einem Tragarm für die Stromschiene, wobei das Fußteil mit dem Tragarm eine Halteaufnahme für den Haltebereich der Stromschiene bildet, wobei am oberen freien Ende des Fußteils einstückig an den Fußteilkörper eine annähernd rechtwinkelig zum Fußteilkörper verlaufende langgestreckte Abkröpfung angeformt ist, welche über ihre wirksame Länge als Auflager für die Anlagebereiche des Tragarms ausgebildet ist und an ihrem freien Ende eine Fußteilhalteklaue bildet, und wobei der Tragarm im Bereich seines der Tragarmhalteklaue entgegengesetzten freien Endes über ein mechanisches Befestigungselement mit der Abkröpfung des Fußteils lösbar verbunden ist. Ein solcher Isolationsträger ist aus DE-U-73 37 642 bekannt.

Aus dem DE-U 88 06 387 ist ein Isolationsträger für Stromschienen aus glasfaserverstärktem Polyesterharz mit einem Fußteil und einem daran festgelegten Tragarm für die Stromschiene bekannt, bei dem das Fußteil einstückig ausgebildet ist und an seinem freien Ende mit Innenbereichen des Tragarms eine Halteaufnahme für den Haltebereich der Stromschiene bildet. Der Tragarm selbst ist zweistückig ausgeführt und besteht aus einem fußteilseitigen Formstück und einem Kopfbereich. Dasd Formstück ist mit dem freien Ende des Fußteils unlösbar verbunden, während der Kopfbereich über eine Gleitpassung mit dem Formstück verbunden und über ein eine Presspassung bewirkendes Klemmelement an diesem lösbar festgelegt ist.

Nach dem bekannten Stand der Technik weist das Formstück eine Grundplate zur Untergreifung sowie eine Basisplatte zur Übergreifung des freien Endes des Fußteils auf und besitzt darüberhinaus einen durch Abstandsstege gehaltene Deckplatte. Die Basisplatte ihrerseits weist randseitig durchlaufend federartige Erhöhungen auf, welche in randnahe Nuten des freien Endes des Fußteils paßförmig eingreifen.

Der bekannte Isolationsträger führt zu einer wirkungsvollen Halterung der Stromschiene am Kopfbereich des Fußteils, wobei sein mehrteiliger Aufbau als Nachteil einen erhöhten Montageaufwand erfordert.

Hier setzt die Erfindung ein, die es sich zur Aufgabe gestellt hat, einen werkzeugtechnisch kostengünstigen Aufbau des Isolationsträgers und insbesondere seine Montagefreundlichkeit sicherzustellen.

Erfindungsgemäß wird hierzu vorgeschlagen, daß der Tragarm in einen Durchbruch in der Abkröpfung einsetzbar ist und an seinem hinteren frein Ende einen nach oben vorstehenden Anschlag besitzt, welcher als Verschiebebegrenzung des Tragarms im Durchbruch der Abkröpfung dient.

In einer bevorzugten Ausführung der Erfindung ist in direktem Anschluß an den Anschlag im Bereich des Durchbruchs für die mechanische Verbindung an der Oberfläche des Tragarms eine trapezförmige Erhöhung angeordnet, welche im Verschiebeendzustand des Tragarms im Durchbruch der Abkröpfung von einer entsprechend gestalteten Aufnahmevertiefung in der zugeordneten Oberfläche des Durchbruchs derart aufgenommen wird, daß zwischen dem Ende der trapezförmigen Erhöhung und dem Beginn der Aufnahmevertiefung ein Wasserabführspalt verbleibt.

Erfindungsgemäß besteht das mechanische Befestigungselement aus einer Befestigungsschraube, welche mit ihrem Gewindeteil über eine Durchgangsöffnung in eine verdrehgesicherte Halteplatte mit entsprechend fluchtender Gewindeöffnung eingreift.

Die Erfindung bringt werkzeugtechnische Vorteile bei der Herstellung des Isolationsträgers. Es werden nur zwei Werkzeuge zur Herstellung des Isolationsträgers alt Fußteil und Tragarm benötigt. So kann gegenüber dem bekannten Stand der Technik auf des Werkzeug für das Oberteil verzichtet werden.

Diese Tatsache bewirkt, daß die Herstellungszyklen für den Gesamtaufbau verringert werden können, da auf die Presszeit für ei nen Teilbereich verzichtet werden kann.

Neben dieser verbesserten Herstellungsmethode des Gesamtteils wird als besonderer Vorteil der einfache Zusammenbau zwischen Fußteil und Tragarm angesehen. Auch die gewählte mechanische Verbindung für die Zusammenführung der beiden Teilbereiche ergibt bei dem neuerungsgemäßen Isolationsträger keine Nachteile, da bei der Konstruktion dafür Sorge getragen worden ist, daß Kriechwasser oder Spritzwasser nicht bis zu den mechanischen Verbindungsmitteln vordringen kann.

Der neuerungsgemäße Isolationsträger ist in der Zeichnung schematisch dargestellt; es zeigt:
Fig.1 den Isolationsträger im Teilschnitt
Fig.2 einen Querschnitt längs der Linie A-A an Fig.2

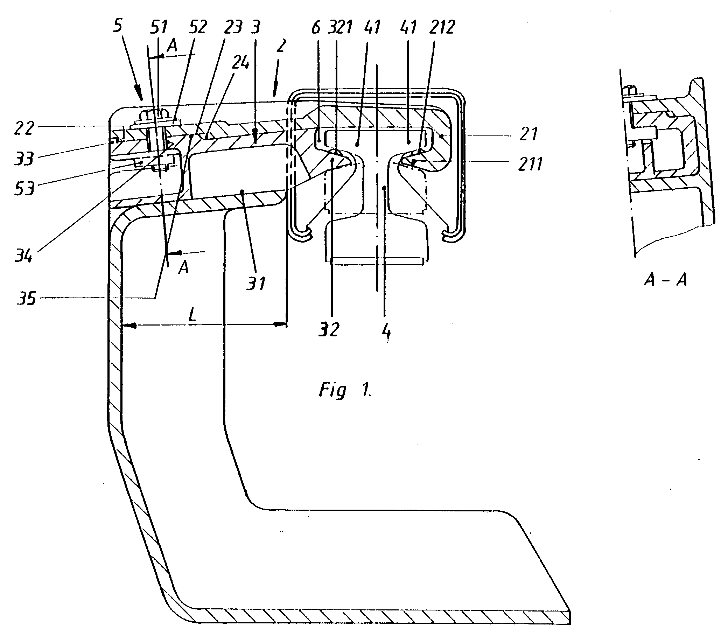

Fig.1 zeigt das Fußteil 1 in seinem oberen Teilbereich, wobei auf die Darstellung des unteren Auflagers auf der Unterlage verzichtet worden ist. Das Fußteil 1 ist beispielsweise aus glasfaserverstärktem Polyesterharz gepresst. Es können jedoch auch alle anderen Materialien zur Herstellung des Fußteils verwendet werden.

Am oberen freien Ende des Fußteils 1 ist einstückig an den Fußteilkörper annähernd rechtwinkelig zu diesem verlaufend die langgestreckte abkröpfung 2 angeformt. Die langgestreckte Abkröpfung 2 ist über ihre wirksame Länge L als Auflager für die Anlagebereiche 31 des Tragarms 3 ausgebildet. Die langgestreckte Abkröpfung 2 bildet an ihrem freien Ende die Fußteilhalteklaue 21 welche den Haltebereich 41 der Stromschiene 4 in der gezeigten Darstellung halternd hintergreift.

Die Fußteilhalteklaue 21 besitzt an ihrem freien Ende 211, dem Haltebereich 42 der Stromschiene 4 zugewandt, eine Gleitschiene 212 aus reibungsminderndem Material, auf der die zugeordneten Oberflächen des Haltebereichs 41 der Stromschiene 4 gleitbeweglich gelagert sind.

Der Tragarm 3 besitzt seinerseits an seinem der Stromschiene 4 zugewandtem freien Ende eine Tragarm-Halteklaue 32, welche den zugeordneten Haltebereich 41 der Stromschiene 4 halternd untergreift. Auch die Tragarmhalteklaue 32 besitzt an ihrer dem Haltebereich 41 der Stromschiene 4 zugewandten freien Außenseite eine Gleitschiene 321, welche die gleichen Aufgaben erfüllt wie die Gleitschiene 212 der Fußteilhalteklaue 21.

An seinem entgegengesetzten freien Ende ist der Tragarm 3 über das mechanische Befestigungselement 5 mit der Abkröpfung 2 des Fußteils 1 verbunden. Das mechanische Befestigungselement 5 besteht in der gezeigten Darstellung aus einer Sechskantschraube 51, einer Unterlagscheibe 52 und einer Gewindeplatte 53. Die Gewindeplatte 53 ist verdrehgesichert im Tragarm 3 gelagert.

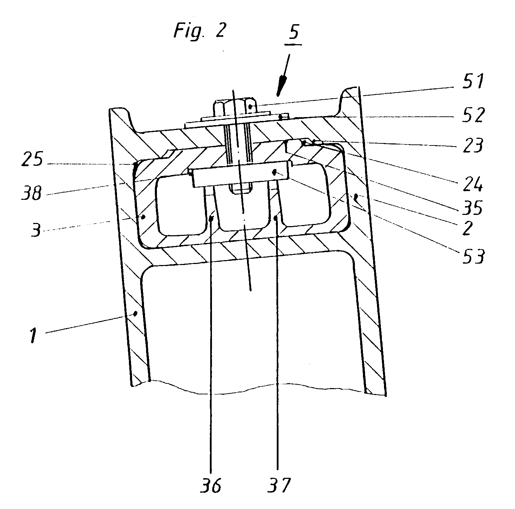

Der Tragarm 3 ist im Bereich der Abkröpfung 2 bis zu einem Anschlag 33 verschieblich gelagert. Der Tragarm 3 ist bei dieser Variante in einem Durchbruch 25 (Fig. 2) in der Abkröpfung 2 eingesetzt und besitzt an seinem hinteren freien Ende den nach oben vorstehenden Anschlag 33, welcher als Verschiebebegrenzung des Tragarms 3 im Durchbruch 25 der Abkröpfung 2 dient.

Beim Einsatz des Tragarms 3 in den Durchbruch 25 der Abkröpfung 2 wird der Endsitz dann erreicht, wenn der am freien Ende des Tragarms 3 nach oben vorstehende Anschlag 33 an der Anschlagfläche 22 am Durchbruch 25 der Abkröpfung 2 anschlägt.

Im direkten Anschluß an den Anschlag 33 ist im Bereich der Durchführungsöffnung 34 für die mechanische Verbindung 5 an der Oberfläche des Tragarms 3 eine trapezförmige Erhöhung 35 angeformt. Diese trapezförmige Erhöhung 35 wird im Verschiebezustand des Tragarms 3 im Durchbruch 25 von einer entsprechend gestalteten Aufnahmevertiefung 23 in der zugeordneten Oberfläche des Durchbruchs 25 aufgenommen. Dabei sind die Abmessungsverhältnisse zwischen der trapezförmigen Erhöhung 35 wird der Aufnahmevertiefung 23 derart gehalten, daß zwischen dem Ende der trapezförmigen Erhöhung 35 und dem Beginn der Aufnahmevertiefung 23 ein Wasserabführspalt 24 verbleibt.

In Fig.2 ist durch den Querschnitt längs der Linie A-A aus Fig.1 der Durchbruch 25 in der Abkröpfung 2 des Fußteils 1 sichtbar. Der Tragarm 3 ist mit seinen geschnittenen Randbereichen in den Durchbruch 25 eingesetzt. Da der Schnitt direkt durch das mechanische Befestigungsmittel 5 führt, ist dessen verdrehgesicherte Halterung deutlich erkennbar. Die Gewindeplatte 53 ist auf zwei einstückig mit dem Tragarm 3 geformten Stützen 36, 37 gehaltert. Die Gewindeplattee 53 greift dabei in eine in der zugeordneten Oberfläche des Tragarms 3 ausgeformte Eingriffsnut 38 ein. Beim Anziehen der Sechskantschraube 51 wird die Gewindeplatte 53 in die Eingriffsnut 38 gezogen, deren Ränder als Verdrehsicherung für die Gewindeplatte 53 wirken. Die Eingriffsnut 38 bewirkt ferner eine Zentrierung der Gewindeplatte 53, so daß das Gewinde der Sechskantschraube 51 bei der Herstellung der Schraubverbindung ohne weiteres auf die Gewindeöffnung der Gewindeplatte 53 trifft.

Aus Fig.2 ergibt sich auch die umlaufende Anordnung des Wasserabführspaltes 24 zwischen dem Ende der trapezförmigen Erhöhung 35 und dem Beginn der Aufnahmevertiefung 23.

Obwohl in den Fig.1 und 2 ein Isolationsträgeraufbau für einen Stromabgriff von unten dargestellt ist, kann durch kinematische Umkehrung der Einzelelemente auch ein Aufbau für einen Stromabgriff an der Stromschiene von oben erreicht werden.

## Patentansprüche

1. Isolationsträger für Stromschienen mit einem Fußteil (1) und einem Tragarm (3) für die Stromschiene (4), wobei das Fußteil (1) mit dem Tragarm (3) eine Halteaufnahme für den Haltebereich (41, 42) der Stromschiene (4) bildet, wobei am oberen freien Ende des Fußteils (1) einstückig an den Fußteilkörper eine annähernd rechtwinkelig zum Fußteilkörper verlaufende langgestreckte Abkröpfung (2) angeformt ist, welche über ihre wirksame Länge (L) als Auflager für die Anlagebereiche des Tragarms (3) ausgebildet ist und an ihrem freien Ende eine Fußteilhalteklaue (21) bildet, und wobei der Tragarm (3) im Bereich seines der Tragarmhalteklaue (32) entgegengesetzten freien Endes über ein mechanisches Befestigungselement (5) mit der Abkröpfung (2) des Fußteils (1) lösbar verbunden ist, dadurch gekennzeichnet, daß der Tragarm (3) in einen Durchbruch in der Abkröpfung (2) einsetzbar ist und an seinem hinteren freien Ende einen nach oben vorstehenden Anschlag (33) besitzt, welcher als Verschiebebegrenzung des Tragarms (3) im Durchbruch der Abkröpfung (2) dient.

2. Isolationsträger nach Anspruch 1, dadurch gekennzeichnet, daß in direktem Anschluß an den Anschlag (33) im Bereich des Durchbruchs (34) für die mechanische Verbindung (5) an der Oberfläche des Tragarms (3) eine trapezförmige Erhöhung (35) angeordnet ist, welche im Verschiebeendzustand des Tragarms (3) im Durchbruch (25) der Abkröpfung (2) von einer entsprechend gestalteten Aufnahmevertiefung (23) in der zugeordneten Oberfläche des Durchbruchs (25) derart aufgenommen wird, daß zwischen dem Ende der trapezförmigen Erhöhung (35) und dem Beginn der Aufnahmevertiefung (23) ein Wasserabführspalt (24) verbleibt.

3. Isolationsträger nach Anspruch 1, dadurch gekennzeichnet, daß das mechanische Befestigungselement (5) aus einer Befestigungsschraube (51) besteht, welche mit ihrem Gewindeteil über eine Durchgangsöffnung (34, 261) in eine verdrehgesicherte Halteplatte (53) mit entsprechend fluchtender Bewindeöffnung eingreift.

## Claims

1. Insulator carrier for live rails with a foot (1) and a support arm (3) for the live rail (4), the foot (1) together with the support arm (3) forming a retaining fixture for the area (41, 42) retaining the live rail (4), whereby at the upper unattached end of the foot (1) the foot body features an angled section (2) moulded thereto in one piece and extending virtually at right angles to the foot body, the effective length (L) of which is constructed as a rest for the contact areas of the support arm (3) and at its unattached end forms a foot retaining claw (21), and whereby the support arm (3), in the area of its unattached end facing the support arm retaining claw (32), is detachably connected via a mechanical fastener (5) to the angled section (2) of the foot (1), characterised by the fact that the support arm (3) can be inserted into an aperture in the angled section (2) and that its rear unattached end features an upwardly projecting stop (33) which serves to limit movement of the support arm (3) in the aperture of the angled section (2).

2. Insulator carrier as described in claim 1, characterised by the fact that, directly following the stop (33), the area of the aperture (34) for the mechanical connector (5) at the surface of the support arm (3) features a trapezoidal elevation (35) which, when the support arm (3) is located at its end position in the aperture (25) of the angled section (2), is accommodated by an appropriately shaped depression (23) in the mating surface of the aperture (25) in such a way that a water drainage gap (24) is left between the end of the trapezoidal elevation (35) and the start of the depression (23).

3. Insulator carrier as described in claim 1, characterised by the fact that the mechanical fastener (5) consists of a fixing bolt (51), the threaded section of which engages through an aperture (34, 261) into a locked retaining plate (53) with appropriately aligned thread opening.

## Revendications

1. Support isolant de rails conducteurs avec un élément de base (1) et un bras support (3) pour le rail conducteur (4), l'élément de base (1) formant avec le bras support (3) un logement d'appui pour la zone de support (41, 42) du rail conducteur (4), l'extrémité supérieure libre de l'élément de base (1) présentant, d'une seule pièce avec le corps d'élément de base, un coude (2) allongé, pratiquement à angle droit par rapport au corps d'élément de base, formé sur sa longueur utile (L) comme un support des zones d'appui du bras support (3) et formant à son extrémité libre une griffe de maintien de l'élément de base (21), le bras support (3) étant raccordé de manière amovible, par un élément de fixation mécanique (5) dans la zone de son extrémité libre opposée à la griffe de maintien du bras support (32), au coude (2) de l'élément de base (1), caractérisé par le fait que le bras support (3) peut être positionné dans une ouverture du coude (2) et possède à son extrémité arrière libre une butée (33) dépassant vers le haut, servant de limitation de translation du bras support (3) dans l'ouverture du coude (2).

2. Support isolant selon la revendication 1, caractérisé par le fait que dans la zone de l'ouverture (34) pour la liaison mécanique (5) et en raccordement direct avec la butée (33), le bras support (3) présente à sa surface un bossage trapézoïdal (35) qui, au stade final du déplacement du bras support (3) dans l'ouverture (25) du coude (2), s'insère dans un évidement de réception (23) de forme appropriée pratiqué dans la surface correspondante de l'ouverture (25) de telle manière qu'il subsiste une fente d'évacuation d'eau (24) entre l'extrémité du bossage trapézoïdal (35) et le début de l'évidement de réception (23).

3. Support isolant selon la revendication 1, caractérisé par le fait que l'élément de fixation mécanique (5) est constitué d'un boulon de fixation (51) dont la partie filetée pénètre, par une ouverture (34, 261), dans une plaque d'appui (53) antitorsion comportant un taraudage correspondant.
